# EUROPEAN PATENT SPECIFICATION

(11) **EP 3 857 494 B1**
(45) Date of publication and mention of the grant of the patent: **25.12.2024**
(21) Application number: 19867955.7
(22) Date of filing: 30.07.2019
(51) Int. Cl.: G06Q 40/00

(54) **METHOD AND SYSTEM FOR USER DATA DRIVEN FINANCIAL TRANSACTION DESCRIPTION DICTIONARY CONSTRUCTION**
VERFAHREN UND SYSTEM FÜR BENUTZERDATENGESTEUERTE ERSTELLUNG EINES WÖRTERBUCHS ZUR BESCHREIBUNG VON FINANZTRANSAKTIONEN
PROCÉDÉ ET SYSTÈME DE CONSTRUCTION DE DICTIONNAIRE DE DESCRIPTION DE TRANSACTION FINANCIÈRE COMMANDÉE PAR DONNÉES UTILISATEUR

(30) Priority: 26.09.2018 US 201816142387
(43) Date of publication of application: 04.08.2021
(73) Proprietor: Intuit Inc., Mountain View, CA 94043 (US)
(72) Inventor: LESNER, Christopher, Mountain View, California 94043 (US); RAN, Alexander S., Mountain View, California 94043 (US); WANG, Wei, Mountain View, California 94043 (US); RUKONIC, Marko, Mountain View, California 94043 (US)
(74) Representative: D Young & Co LLP
(86) International application number: PCT/US2019/044182
(87) International publication number: WO 2020/068265

(56) References cited:
- US-A1- 2009 222 364
- US-A1- 2012 265 655
- US-A1- 2014 279 299
- US-A1- 2016 085 742
- US-B1- 7 966 329
- US-B1- 7 966 329
- US-B1- 8 661 038
- GANGEH MEHRDAD J ET AL: "Supervised Dictionary Learning and Sparse Representation-A Review Big Data Analytics, Bioinformatics and Computatoinal Biology View project Design and Development of Computer Aided Theragnosis Systems View project", 27 February 2015 (2015-02-27), XP055920193, Retrieved from the Internet <URL:https://www.researchgate.net/profile/Mehrdad-Gangeh/publication/272752405_Supervised_Dictionary_Learning_and_Sparse_Representation-A_Review/links/54f07f690cf2f9e34efc6d8f/Supervised-Dictionary-Learning-and-Sparse-Representation-A-Review.pdf> [retrieved on 20220511]

## Description

### BACKGROUND

Every year millions of people around the world use electronic data management systems to help manage their personal data. For example, many people utilize data management systems to help manage their finances. Such data management systems gather data related to financial transactions of their users. The users can monitor many or all of their financial transactions and other financial matters from a single data management system. Data management systems can help users save time by eliminating the need to check several different financial accounts in order to manage their finances.

Automated download of financial transactions from financial institutions can be a highly valued feature of data management systems such as bookkeeping systems, tax return preparation systems, and personal financial tracking systems. Downloaded transactions can help users reconcile their income and expenses and create business reports in bookkeeping systems, help locate donations and other deductions in tax return preparation systems, and help users monitor their spending and budgets in personal financial tracking systems.

Nevertheless, traditional data management systems are unable to fully utilize the potential benefits of automatic download of financial transactions. One obstacle to using downloaded financial transactions is the variable format of their description strings. The description strings may include any of the following: payee/payer name and/or ID number, city, state, street address, transaction number, a reference number, a payment method, a payment card or account number, a date, a time, a payment amount, and unit of payment. Additionally, financial transaction description strings can include scraping errors. The scraping errors can include token merges, duplication, and truncation. Due to this variability, even the same location of a single merchant can result in transaction descriptions that have well over 300 different formats depending on which payment method was used, which payment networks handled the transaction and which financial institution recorded the transaction.

Ideally, the financial transaction description string would clearly identify all characteristics of a financial transaction including the merchant, the price, the date, and the location. However, based in part on the scraping errors described above, all too often the financial transaction description strings are so unstructured, lacking in detail, or otherwise corrupted that the characteristics of the financial transactions cannot be readily identified from the financial transaction description strings alone. In these cases, traditional data management systems will fail to identify all the relevant data associated with these financial transactions.

These failures of traditional data management systems can have tremendous adverse impact on users. A user that views the financial transaction history provided by the data management system may not recognize aspects of the financial transactions because the financial management system only presents the financial transaction description strings to the user due to the fact that the data management system is unable to identify relevant characteristics of the financial transactions from the financial transaction description strings. This may cause the user to undergo great efforts to identify further details related to the financial transactions. In some cases, the user may decide that a financial transaction is fraudulent and may initiate fraud prevention procedures with a credit card company or bank only to finally discover that the financial transaction was valid. Users may become very frustrated with the traditional financial management system and may eventually abandon the financial management system in favor of other methods of managing their finances. Not only does this adversely affect the users, but financial management systems may need to devote large amounts of human and computer resources to assist large numbers of users in resolving these issues.

What is needed is a method and system that solves the long-standing technical problem of electronic data management systems that are unable to identify relevant details associated with a financial transaction based on the financial transaction description string.

US 7,966,329 Bl discloses a method for categorizing financial transactions, that includes identifying a vendor of the first financial transaction. An attempt is made to categorize the transaction on a first categorization level complying with a first categorization scheme, then a second categorization level that complies with a second categorization scheme, and then a third categorization level that complies with a third categorization scheme. The first categorization scheme differs from the second categorization scheme. When the transaction cannot be categorized on a previous categorization level, the attempt is made for the next level and the second categorization level. The transaction is categorized on the third level. The method further includes displaying the vendor category.

Gangeh Mehrdad J ET AL: "Supervised Dictionary Learning and Sparse Representation-A Review Big Data Analytics, Bioinformatics and Computatoinal Biology View project Design and Development of Computer Aided Theragnosis Systems View project", 27 February 2015, discloses a review of Supervised Dictionary Learning and Sparse Representation.

US 2016/0085742 Al discloses knowledge automation techniques including selecting a knowledge element from a knowledge corpus of an enterprise for extraction of n-grams, and deriving a term vector comprising terms in the knowledge element.

### SUMMARY

The invention is defined in the appended independent claims. Embodiments of the present disclosure provide one or more technical solutions to the technical problem of electronic data management systems that are unable to identify relevant details associated with a financial transaction based on the financial transaction description string. Embodiments of the present disclosure include a data management system according to appended claims 12-14.

Embodiments of the present disclosure address some of the shortcomings associated with traditional data management systems. Machine learning processes are utilized to assist in identifying the portions of financial transaction description string that are predictive of the category of aspects of the financial transactions. The various embodiments of the disclosure can be implemented to improve the technical fields of data management, data processing, and data transmission. Therefore, the various described embodiments of the disclosure and their associated benefits amount to significantly more than an abstract idea.

### BRIEF DESCRIPTION OF THE DRAWINGS

FIG. 1 is a block diagram of a system for identifying predictive characteristics of financial transaction description strings, in accordance with one embodiment.
FIG. 2 is a block diagram of a process for identifying predictive characteristics of financial transaction description strings, in accordance with one embodiment.
FIG. 3 is a flow diagram of a process for identifying predictive characteristics of financial transaction description strings, in accordance with one embodiment.
FIG. 4 is a flow diagram of a process for identifying predictive characteristics of financial transaction description strings, in accordance with one example in which not every feature of the independent claims is recited.

Common reference numerals are used throughout the FIG.s and the detailed description to indicate like elements. One skilled in the art will readily recognize that the above FIG.s are examples and that other architectures, modes of operation, orders of operation, and elements/functions can be provided and implemented without departing from the characteristics and features of the invention, as set forth in the claims.

### DETAILED DESCRIPTION

Embodiments will now be discussed with reference to the accompanying FIG.s, which depict one or more exemplary embodiments. Embodiments may be implemented in many different forms and should not be construed as limited to the embodiments set forth herein, shown in the FIG.s, and/or described below. Rather, these exemplary embodiments are provided to allow a complete disclosure that conveys the principles of the invention, as set forth in the claims, to those of skill in the art.

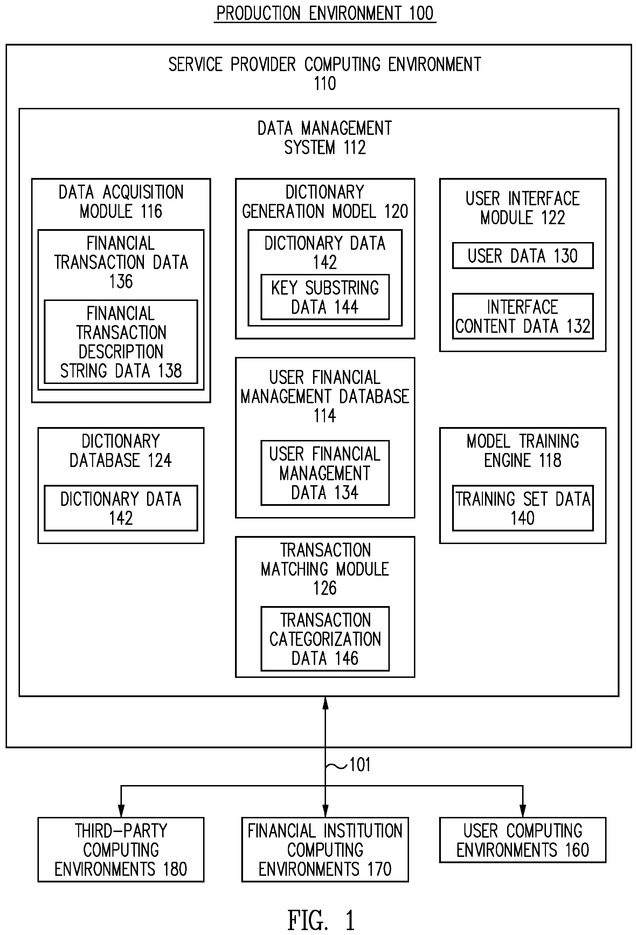

FIG. 1 illustrates a block diagram of a production environment 100 for identifying predictive characteristics of financial transaction description strings, according to one embodiment. Embodiments of the present disclosure utilize machine learning processes to learn which portions of financial transaction description strings identify various characteristics of the financial transactions. By training a dictionary generation model to classify financial transactions based on the financial transaction description strings, the dictionary generation model can identify which portions or substrings of financial transaction description strings are most predictive of the classification. The dictionary generation model can then generate a dictionary indicating which portions or substrings of the financial transaction description strings are predictive of the classification. The dictionary can then be used to improve data management services provided to the users by accurately identifying the characteristics of future financial transactions based on the financial transaction description strings.

In addition, the disclosed methods and systems for identifying predictive characteristics of financial transaction description strings provides for significant improvements to the technical fields of electronic financial transaction data processing, data processing, data management, and user experience.

In addition, as discussed above, the disclosed methods and systems for identifying predictive characteristics of financial transaction description strings provide for the processing and storage of smaller amounts of data, i.e., more efficiently provide financial management services; thereby eliminating unnecessary data analysis and storage. Consequently, using the disclosed methods and systems for identifying predictive characteristics of financial transaction description strings results in more efficient use of human and non-human resources, fewer processor cycles being utilized, reduced memory utilization, and less communications bandwidth being utilized to relay data to, and from, backend systems and client systems, and various investigative systems and parties. As a result, computing systems are transformed into faster, more efficient, and more effective computing systems by implementing the method and system providing methods and systems for identifying predictive characteristics of financial transaction description strings.

In one embodiment, financial transaction description strings include large strings of alphanumeric characters. Some portions of the alphanumeric strings may include recognizable words, portions of words, or portions of dates or prices. However, these words and portions of words may be broken up by strings of seemingly unintelligible alphanumeric characters. The unintelligible nature of the transaction description strings is a result, in part, of the disparate systems, servers, and relays through which the description strings pass before they are received by the data management system.

In one embodiment, the financial transaction description strings in the training set data are classified according to the merchant involved in financial transactions. Accordingly, the training set data includes financial transaction description strings for which the merchant counterparty is known. Thus, the financial transaction description strings in the training set data are labeled according to merchant counterparties involved in the financial transactions.

In one embodiment, the financial transaction description strings in the training set are labeled by users of the data management system. In particular, the financial transaction description strings in the training set data are labeled by users when they sort or categorize the financial transaction description strings while utilizing accounting, tax return preparation, or budgeting services provided by the data management system. For accounting purposes, users may categorize financial transactions based on the merchant or type of merchant. For tax return preparation purposes, users may financial transactions into various tax categories based on the merchant or industry associated with the financial transaction. For budgeting purposes, users may categorize financial transactions into various budgeting categories based on the merchant or type of merchant associated with the financial transaction. The data management system can then gather these labeled financial transaction description strings from the users in order to generate a labeled training set.

In one embodiment, the data management system trains the dictionary generation model to accurately classify each financial transaction description string from the training set data. During the machine learning process, the dictionary generation model applies various functions to the various portions of the financial transaction description strings in order to identify, from the financial transaction description strings, the merchants involved in the financial transactions. A byproduct of this machine learning process is that the portions of the financial transaction description strings that are most relevant in identifying the merchants can be identified by analyzing the learned functions.

In one embodiment, the dictionary generation model generates a dictionary identifying the key substrings from the financial transaction description strings for identifying the merchants involved. The data management system can utilize this dictionary to assist users to better manage their finances.

In one embodiment, the dictionary is a collection of substrings derived from the financial transaction description strings from the training set. The substrings enable one or more classification algorithms to closely match the user contributed labels in the training set, as well as in test sets after training has been performed. In one embodiment, the machine learning algorithm includes one or more of a logistic regression classifier algorithm, a naive Bayes classifier algorithm, a support vector machine algorithm, a decision tree algorithm, a boosted trees algorithm, a random forest, a neural network algorithm, a nearest neighbor algorithm, or other types of machine learning classification algorithms.

In one embodiment the data management system is a bookkeeping system. The data management system can utilize the dictionary to identify the merchants involved in the various financial transactions of the users. In particular, when the data management system receives a new financial transaction description string for a user, the data management system can compare the financial transaction description string to the dictionary in order to identify one or more portions or substrings of the financial transaction description string that match one or more key portions, terms, or substrings included in the dictionary. The data management system can identify the merchant involved in financial transactions based on the portions of the financial transaction description string that match key portions, terms, or substrings included in the dictionary. The data management system can then assist the user to sort the financial transaction into the correct bookkeeping account or category.

In one embodiment, the data management system is a tax return preparation system. When the data management system receives a financial transaction description string for a user, the data management system can compare the financial transaction description string to the dictionary in order to identify one or more portions of the financial transaction description string that match one or more key portions, terms, or substrings included in the dictionary. The data management system can identify the merchant involved in financial transactions based on the portions of the financial transaction description string that match key portions, terms, or substrings included in the dictionary. The data management system can then assist the user to correctly categorize the financial transaction for tax return preparation purposes.

In one embodiment, the data management system is a personal financial tracking system that assists users to track financial transactions and keep a budget. When the data management system receives a new financial transaction description string for a user, the data management system can compare the financial transaction description string to the dictionary in order to identify one or more portions of the financial transaction description string that match one or more key portions, terms, or substrings included in the dictionary. The data management system can identify the merchant involved in financial transactions based on the portions of the financial transaction description string that match key portions, terms, or substrings included in the dictionary. The data management system can then assist the user to sort the financial transaction into the correct budgeting category.

In one embodiment, the data management system generates the dictionary to identify substrings that assist in identifying one or more of a merchant name, a merchant location, a merchant store number, a transaction date, a transaction time, a transaction payment method, a financial institution involved in the financial transaction, a name of the payer, or other aspects of financial transactions. The data management system can utilize the dictionary to identify one or more characteristics of future financial transaction transactions of users based on comparisons of the financial transaction description strings to the dictionary.

In one embodiment, the data management system can generate multiple types of dictionaries. For example, the data management system can generate a dictionary for a particular nation based on analysis of financial transaction description strings for financial transactions that occurred in the nation. The data management system can generate dictionaries for each of various regions within the nation based on analysis of financial transaction description strings for financial transactions that occurred in the various regions within the nation. The data management system can generate dictionaries for each of various cities within the nation or region based on analysis of financial transaction description strings for financial transactions that occurred within the various cities. The data management system can generate dictionaries for individuals based on analysis of the financial transaction description strings associated with the individuals. The data management system can utilize these various dictionaries in assisting users to manage their finances by identifying characteristics of the financial transactions.

The production environment 100 includes a service provider computing environment 110, user computing environments 160, financial institution computing environments 170, and third-party computing environments 180, for identifying predictive characteristics of financial transaction description strings, according to various embodiments. The computing environments 110, 160, 170, and 180 are communicatively coupled to each other with one or more communication channels 101, according to one embodiment.

The service provider computing environment 110 represents one or more computing systems such as a server or distribution center that is configured to receive, execute, and host one or more data management systems (e.g., applications) for access by one or more users, for identifying predictive characteristics of financial transaction description strings, according to one embodiment. The service provider computing environment 110 represents a traditional data center computing environment, a virtual asset computing environment (e.g., a cloud computing environment), or a hybrid between a traditional data center computing environment and a virtual asset computing environment, according to one embodiment.

The service provider computing environment 110 includes a data management system 112, which is configured to provide data management services to a user.

According to one embodiment, the data management system 112 can be a system that manages one or more of book-keeping, financial accounting, banking, investments, loans, credit cards, real estate investments, retirement planning, bill pay, and budgeting. The data management system 112 can be a tax return preparation system or other type of data management system. The data management system 112 can be a standalone system that provides financial management services to users. Alternatively, the data management system 112 can be integrated into other software or service products provided by a service provider.

The data management system 112 receives financial transaction data related to financial transactions of users of the data management system 112. The data management system provides financial management services to the users based in part on the financial transaction data. For example, the data management system 112 can assist users in tracking expenditures and revenues by gathering the financial transaction data and organizing, for each user, the financial transaction data in a way that assists users to have an accurate view of their financial situations. The financial transaction data includes financial transaction description strings for each financial transaction. The data management system 112 identifies various details regarding financial transactions from the financial transaction description strings.

The data management system 112 includes a user interface module 122, a user financial management database 114, a data acquisition module 116, a model training engine 118, a dictionary generation model 120, a dictionary database 124, and a transaction matching module 126, according to various embodiments.

The user computing environments 160 correspond to computing environments of the various users of the data management system 112. The users of the data management system 112 utilize the user computing environments 160 to interact with the data management system 112. The users of the data management system 112 can use the user computing environments 160 to provide data to the data management system 112 and to receive data, including financial management services, from the data management system 112.

In one embodiment, the data management system 112 can provide financial management services to individuals, businesses, organizations, government entities, groups of individuals, or any other entities for which financial management services would be beneficial, according to one embodiment. Individuals may utilize the data management system 112 to track their own revenues and expenditures. Businesses of all kinds, including large corporations, midsize companies, small businesses, or even sole proprietor businesses, can utilize the data management system 112 to track and sort their financial transactions as a way to better manage their finances. Likewise, government organizations may use the data management system 112 to track various types of expenditures and revenues. Organizations other than businesses and government entities, such as nonprofit organizations, may also utilize the data management system 112 for the purpose of monitoring and sorting expenditures and revenues. Thus, the term "user" can refer to many types of entities.

Returning to the data management system 112, the user interface module 122 is configured to receive user data 130 from the users, according to one embodiment. The user data 130 includes information, such as, but not limited to, a name of the user, an address of the user, authentication data that enables the user to access the data management system, or any other types of data that a user may provide in working with the data management system 112.

In one embodiment, the user data 130 can include account data corresponding to financial institution authentication data that enables the data management system 112 to access the financial accounts that the user has with third-party financial institutions or other third-parties. In one embodiment, the financial institution authentication data provided by the users as part of the user data 130 enables the data management system 112 to acquire information related to financial transactions of the users. The financial institution authentication data can include data that allows the data management system 112 to gain access to credit card data, bank account data, retirement fund data, payroll data, income data, loan data, interest accrual data, student loan data, property ownership data, tax data, budgeting data, rent data, investments data, employment data, or other types of data regarding financial transactions or financial accounts of the users. Thus, the financial institution authentication data can include login credentials and personal identification data for various websites of third-party financial institutions. The financial institution authentication data can include usernames, passwords, bank account numbers, routing numbers, credit card numbers, answers to security questions, identification numbers, government identification numbers, birth dates, addresses, or other types of verification credentials that allow the data management system 112 to gain access to online services of third-party financial service institutions.

According to an embodiment, the user interface module 122 provides interface content data 132 to assist the user in managing the user's finances. The interface content data 132 can include navigation menus and other graphical user interface (GUI) tools that enable the user to navigate the data management system 112 in order to receive financial management services. The interface content data 132 can include financial management data related to the financial transactions of the user. Thus, the user interface module 122 enables the data management system 112 to provide financial management services to the user.

In one embodiment, the data management system 112 includes a user financial management database 114. The user financial management database 114 includes the user financial management data 134. The user financial management data 134 can include financial management data for all of the users of the data management system. Thus, the user financial management database 114 can include a vast amount of data related to the financial management services provided to users. In one embodiment, when the user utilizes the user interface module 122 to view interface content data 132, the interface content data 132 includes user financial management data 134 related to the user as retrieved from the user financial management database 114.

In one embodiment, the user financial management data 134 includes data related to the financial transactions of the users. The user financial management data 134 can include, for each user, a list of financial transactions, summaries of various financial accounts, and other tools to assist the user in managing the user's finances.

In one embodiment, each financial transaction in the user financial management data 134 includes merchant identification data that identifies the merchant or vendor involved in the financial transactions. It can be particularly useful for the user to track financial transactions based on which merchants, vendors, or other types of counterparties were party to the financial transactions. This can help the user to more effectively manage the user's finances. Additionally, this can help the user to detect fraud or errors if the user notices, in the financial transactions of the user, unknown merchants with whom the user has not had any financial transactions.

In one embodiment, the data management system 112 utilizes the data acquisition module 116 to retrieve financial transaction data 136 related to the financial transactions of the users of the data management system 112. The data acquisition module 116 is configured to use the financial institution authentication data provided with the user data 130 to acquire financial transaction data 136 related to financial transactions of the users. In particular, the data acquisition module 116 uses the financial institution authentication data received with the user data 130 to log into the online services of third-party financial institutions in order to retrieve financial transaction data 136 related to the financial transactions of users of the data management system 112. For example, the financial transaction data 136 can include debit card transactions, credit card transactions, credit card balances, bank account deposits, bank account withdrawals, credit card payment transactions, online payment service transactions such as PayPal transactions or other online payment service transactions, loan payment transactions, investment account transactions, retirement account transactions, mortgage payment transactions, rent payment transactions, bill pay transactions, budgeting information, financial goal information, or any other types of financial transactions. The data acquisition module 116 is configured to gather the financial transaction data from financial institution computing environments 170 related to financial service institutions with which one or more users of the data management system 112 have a relationship. The financial transaction data 136 can include, for each financial transaction, time stamp data corresponding to a time stamp that indicates the date and time of the financial transaction.

In one example, the data acquisition module 116 uses the financial institution authentication data received with the user data 130 to acquire data related to withdrawals, deposits, and balances in the bank accounts of users. The financial transaction data 136 includes data related to these withdrawals, deposits, and balances. Accordingly, the financial institution authentication data can include usernames, passwords, bank account numbers, routing numbers, or other validation credentials needed to access online services of various banking institutions.

In one embodiment, the financial transaction data 136 includes financial transaction description string data 138. The financial transaction description string data 138 includes financial transaction description strings related to the financial transactions. Typically, when the data acquisition module 116 retrieves financial transaction data 136 related to a particular financial transaction, the financial transaction data will include a financial transaction description string based on the details associated with the financial transaction. These details can include the merchant counterparty, the date of the financial transaction, the price involved in the financial transaction, a geolocation associated with the financial transaction, a branch or store number associated with the financial transaction, a financial institution involved in the financial transaction, and the user involved in the financial transaction.

As set forth above, in many cases the financial transaction description strings are not in a form that enables quickly ascertaining the details of the financial transaction. Some aspects of the financial transaction may be apparent from the financial transaction description strings, such as the merchant involved, but other aspects may not be readily apparent from the financial transaction description strings.

In some cases, the financial transaction description strings include garbled or unintelligible strings of alphanumeric characters. The name of the merchant may be broken up among the strings of alphanumeric characters. A first portion of a name of the merchant may be separated from a second portion of the name of the merchant by several alphanumeric characters. In some cases, the name of the merchant itself is not readily identifiable to a human even when looking for portions of the merchant's name scattered throughout the alphanumeric string.

In one embodiment, the data management system 112 provides further understanding regarding the nature of the financial transaction description strings by applying machine learning processes to training set data generated from the financial transaction data 136. In one embodiment, the data management system utilizes the model training engine 118 and the dictionary generation model 120 to assist in better understanding the various portions of the financial transaction description strings.

In one embodiment, the data management system 112 generates training set data 140. The training set data 140 is generated from the financial transaction data 136. The training set data 140 can be utilized by the model training engine 118 to train a dictionary generation model 120.

In one embodiment, the data management system 112 generates the training set data 140 by gathering a plurality of financial transaction description strings with a known characteristic. Each financial transaction description string is classified and labeled according to the known characteristic.

In one example, in accordance with one embodiment, the training set data 140 is classified according to the merchant counterparty involved in the financial transactions. Accordingly, each financial transaction description string is classified and labeled in accordance with the merchant known to be involved in the financial transaction. Additionally, or alternatively, the financial transaction description strings in the training set data 140 can be labeled are classified in accordance with some other known characteristic or characteristics of the financial transactions including one or more of a date, the price, a geolocation, a store number or branch number, or financial institution involved in the financial transactions.

In one embodiment, the financial transaction description strings in the training set data 140 are labeled by users of the data management system 112. In particular, the financial transaction description strings in the training set data 140 are labeled by users when they sort or categorize the financial transaction description strings while utilizing accounting, tax return preparation, or budgeting services provided by the data management system 112. For accounting purposes, users may categorize financial transactions based on the merchant or type of merchant. For tax return preparation purposes, users may financial transactions into various tax categories based on the merchant or industry associated with the financial transaction. For budgeting purposes, users may categorize financial transactions into various budgeting categories based on the merchant or type of merchant associated with the financial transaction. The data management system 112 can then gather these labeled financial transaction description strings from the users in order to generate labeled training set data 140.

In one embodiment, the model training engine 118 utilizes the training set data 140 to train the dictionary generation model 120 in accordance with one or more machine learning processes. The model training engine 118 trains the dictionary generation model 120 to accurately classify each of the financial transaction description strings from the training set data 140. The model training engine 118 trains the dictionary generation model 120 to replicate a labeling a classification from the training set data 140 based on the financial transaction description strings.

In one embodiment, the model training engine 118 trains the dictionary generation model 120 in iterative processes. The training set data 140 is fed to the dictionary generation model 120. The dictionary generation model 120 applies a set of functions to each financial transaction description string. The dictionary generation model 120 generates a classification for each financial transaction description string based on the set of functions. Thus, the various portions of the alphanumeric string that is the financial transaction description string are the inputs for the set of functions. After the dictionary generation model 120 has classified each financial transaction description string, the model training engine 118 checks the accuracy of the classification against the labels from the training set data 140.

In one embodiment, after the model training engine 118 checks the accuracy of the previous classification, the dictionary generation model 120 adjusts the set of functions. After the set of functions has been adjusted, the dictionary generation model 120 again analyzes the financial transaction description strings from the training set data 140 and classifies each financial transaction description string. After each financial transaction description string has been classified, the model training engine 118 again checks the accuracy of the classifications.

In one embodiment, the machine learning process continues by iteratively adjusting the set of functions and checking the resulting classifications. This process continues until the dictionary generation model 120 has learned a set of functions that results in accurate classification of the financial transactions descriptions from the training set data 140. In this way, the model training engine 118 trains the dictionary generation model 120 with a machine learning process until the dictionary generation model 120 can accurately classify the financial transactions based on the financial transaction description strings.

In one embodiment, the model training engine 118 trains the dictionary generation model 120 with a supervised machine learning process. The machine learning process is supervised because the training set data 140 includes labeled data against which the classification performed by the dictionary generation model 120 can be checked. Alternatively, or additionally, the model training engine 118 can train the dictionary generation model with an unsupervised machine learning process. Alternatively, or additionally, the model training engine 118 can train a dictionary generation model with an unsupervised deep learning machine learning process. Alternatively, or additionally, the model training engine 118 can train the dictionary generation model 120 with a combination of supervised, unsupervised, and deep learning machine learning processes.

In one embodiment, the dictionary generation model 120 includes a logistic regression model. In one embodiment, the dictionary generation model 120 includes a random forest model. In one embodiment, the dictionary generation model includes a linear regression model. In one embodiment, the dictionary generation model includes a linear discriminant model. In one embodiment, the dictionary generation model includes a neural networks model. In one embodiment, the dictionary generation model 120 includes a support vector machines model. In one embodiment, the dictionary generation model includes a decision tree model. In one embodiment, the dictionary generation model utilizes a latent Dirichlet allocation (LDA) model. In one embodiment, the dictionary generation model 120 includes a naive Bayes model. In one embodiment, the dictionary generation model 120 includes a K nearest neighbors model. Additionally, or alternatively, the dictionary generation model 120 can utilize other types of models or algorithms.

In one embodiment, the dictionary generation model 120 includes both supervised and unsupervised machine learning. The unsupervised learning includes, in one embodiment, one or more of an LDA model, a probabilistic topic model, a clustering model, or other kinds of unsupervised learning. The supervised learning includes, in one embodiment, a multiclass classifier or another kind of supervised learning model.

In one embodiment, after the dictionary generation model 120 has learned a set of functions that accurately reproduces the classification of the training set data 140, the dictionary generation model 120 can be utilized to assist in learning further details about a financial transaction description string. By analyzing the set of functions utilized by the dictionary generation model 120 to classify the financial transaction description strings, the dictionary generation model 120 can identify which portions of the financial transaction description strings were relevant to the dictionary generation model in classifying the financial transaction description strings in accordance with the selected type of classification. This type of learning is very useful in learning to classify future financial transaction description strings.

In one example, in accordance with one embodiment, the training set data 140 is labeled or classified based on the merchants involved in the financial transactions. After the dictionary generation model 120 has been trained, the dictionary generation model 120 can identify which portions of the financial transaction description strings were relevant to the dictionary generation model 120 in determining who were the merchants involved in the financial transactions. In some cases, there may be multiple relevant portions of a financial transaction description string separated by irrelevant portions of the financial transaction description string. The knowledge of which portions of the financial transaction description strings were relevant in identifying the merchants involved in the financial transaction description strings can enhance the ability of the data management system 112 to identify merchants from the financial transaction description strings in the future.

In one embodiment, the dictionary generation model 120 generates dictionary data 142. The dictionary data 142 includes key substring data 144 The key substring data 144 includes the portions of the financial transaction description strings that were relevant to the dictionary generation model 120 in classifying the financial transaction description strings.

In one embodiment, the dictionary data 142 is a collection of substrings derived from the financial transaction description strings from the training set. The substrings enable one or more classification algorithms utilized by the dictionary generation model 120 to closely match the user contributed labels in the training set, as well as in test sets after training has been performed.

In the example in which the key substring data 144 corresponds to the portions used by the dictionary generation model 120 to identify a merchant involved in the financial transaction description string, the key substring data 144 can correspond to other aspects of the financial transaction description strings depending on the type of classification desired.

According to the invention, the dictionary generation model 120 generates dictionary data 142 including key substring data 144 by identifying the smallest substrings that predict classification. The dictionary generation model 120 analyzes all possible sets of n-grams from a financial transaction description string when determining which portion of substring from the financial transaction description data most heavily determines a classification of the financial transaction. The dictionary generation model 120 is configured to identify the smallest n-grams or substrings that determine classification. For example, if there is a substring of six characters that predict the correct classification, the dictionary generation model 120 can test substrings of five characters from the substring of six characters to determine if any of the substrings of five characters more strongly predict the correct classification than the substring of six characters. The dictionary generation model 120 can continue until the smallest, yet still strongly predictive n-gram has been identified.

In one embodiment, the key substring data 144 can include substrings that are disconnected from each other within financial transaction description data. For example, a key substring can include multiple strings of alphanumeric characters separated from each other by an irrelevant string of alphanumeric characters.

In one embodiment, the dictionary generation model includes a recurrent neural network. The recurrent neural network can include a plurality of nodes. Connections between the nodes form a directed graph along a sequence. The recurrent neural network can exhibit dynamic temporal behavior for a time sequence. The recurrent neural network can use its internal memory to process sequences of inputs. In one embodiment, the recurrent neural network is an attention based recurrent neural network.

In one embodiment, the dictionary generation model 120 is a classifier model. The classifier model receives financial transaction description strings as input and classifies the financial transaction description strings.

In one embodiment, the dictionary database 124 stores dictionary data 142 including one or more dictionaries generated by or from the dictionary generation model 120. The data management system can utilize these various dictionaries in assisting users to manage their finances by identifying characteristics of the financial transactions.

In one embodiment, the data management system 112 can generate multiple types of dictionaries. For example, the data management system 112 can generate a dictionary for a particular nation based on analysis of financial transaction description strings for financial transactions that occurred in the nation.

In one embodiment, the data management system 112 can generate dictionaries for each of various regions within the nation based on analysis of financial transaction description strings for financial transactions that occurred in the various regions within the nation.

In one embodiment, the data management system can generate dictionaries for each of various cities within the nation or region based on analysis of financial transaction description strings for financial transactions that occurred within the various cities.

In one embodiment, the data management system can generate dictionaries for individuals based on analysis of the financial transaction description strings associated with the individuals.

In one embodiment, the data management system 112 utilizes the transaction matching module 126 to identify the characteristics of new financial transactions received for the users. When a new financial transaction is received, related to a user, the transaction matching module 126 compares the financial transaction description string to the dictionary data 142. The transaction matching module 126 identifies in the dictionary data 142, one or more subset strings that match a portion of the financial transaction description string currently under analysis. The transaction matching module 126 identifies characteristics of the financial transaction description string based on the subset strings identified in the dictionary data 142.

In one embodiment, the transaction matching module 126 generates transaction categorization data 146 identifying a category or characteristic of new financial transactions based on comparisons of the new financial transactions to the dictionary data 142. The transaction categorization data 146 can identify one or more of a merchant identity, a store number, a date, a time, a payment method, a payer, a payee, an amount of money, a payment method, or financial institution.

In one embodiment, the dictionary data 142 includes substrings that are characteristic of merchant identities. When the new financial transaction is received, the transaction matching module 126 compares the financial transaction description string from the new financial transaction to the dictionary data 142. The transaction matching module 126 identifies one or more substrings from the dictionary data 142 that match a portion of the financial transaction description string currently under analysis. The transaction matching module 126 generates transaction categorization data 146 identifying the merchants involved in the financial transaction based on the matching substrings from the dictionary data 142.

In one embodiment, after the transaction matching module 126 has generated transaction categorization data 146 identifying the merchants involved in the new financial transaction, the data management system 112 can utilize the transaction categorization data 146 to provide financial management assistance to the user based on the new financial transaction. The data management system 112 can assist the user to sort the financial transaction into an appropriate bookkeeping account or category based on the identity of the merchant. Additionally, or alternatively, the data management system 112 can assist the user to correctly categForize the financial transaction for tax purposes based on the identity of the merchant. Additionally, or alternatively, the data management system 112 can assist the user to sort the financial transaction into a budgeting category.

In one embodiment, the training set data 140 is generated by gathering a very large number of financial transaction description strings which have been assigned or categorized by users of the data management system 112. The financial transactions of the training set data 140 are labeled in accordance with the assignment to a classification previously provided by the users of the data management system 112.

In one embodiment, each financial transaction string from the training set data 140 is broken up into substrings. The substrings can include n-grams of alphanumeric characters from the financial transaction description string, wherein each n-gram is a string of alphanumeric characters of length n. The substrings can include shingles, in the sense that the n-grams can overlap each other.

In one embodiment, the dictionary generation model 120 selects the shortest substrings that best predict the correct label based on analysis of the financial transaction description strings from the training set data 140. In one embodiment, the predictive power of each substring is assigned a score indicative of the predictive power of the substring.

In one embodiment, when a new financial transaction description string is received by the data management system 112, the transaction matching module 126 compares the financial transaction description string to the dictionary data 142. The transaction matching module 126 identifies the substrings from the financial transaction description string that have the highest predictive power score in the dictionary data 142. The transaction matching module 126 utilizes these identified substrings to categorize the financial transaction.

In one embodiment, when a new financial transaction description string is received by the data management system 112, the transaction matching module 126 can compare the financial transaction description string to multiple dictionaries from the dictionary database 124. The transaction matching module 126 can first compare the financial transaction description string to the narrowest dictionary, i.e. a dictionary built for the individual user associated with the financial transaction description string. If the transaction matching module 126 does not find satisfactory substrings in the narrowest dictionary, the transaction matching module 126 can compare the financial transaction description string to the next most narrow dictionary, i.e. a dictionary built for the city or region in which the user resides. The transaction matching module 126 can continue to compare the financial transaction description string to broader and broader dictionaries until a satisfactory substring is identified for categorizing the financial transaction.

In one embodiment the data management system 112 is a bookkeeping system. The transaction matching module 126 can utilize the dictionary to identify the merchants involved in the various financial transactions of the users. In particular, when the data management system 112 receives a new financial transaction description string for a user, the transaction matching module 126 can compare the financial transaction description string to the dictionary in order to identify one or more portions of the financial transaction description string that match one or more key portions, terms, or substrings included in the dictionary. The transaction matching module 126 can identify the merchant involved in financial transactions based on the portions of the financial transaction description string that match key portions, terms, or substrings included in the dictionary. The data management system 112 can then assist the user to sort the financial transaction into the correct bookkeeping account or category.

In one embodiment, the data management system 112 is a tax return preparation system. When the data management system receives a financial transaction description string for a user, the transaction matching module 126 can compare the financial transaction description string to the dictionary in order to identify one or more portions of the financial transaction description string that match one or more key portions, terms, or substrings included in the dictionary. The transaction matching module 126 can identify the merchant involved in financial transactions based on the portions of the financial transaction description string that match key portions, terms, or substrings included in the dictionary. The data management system 112 can then assist the user to correctly categorize the financial transaction for tax return preparation purposes.

In one embodiment, the data management system 112 is a personal financial tracking system that assists users to track financial transactions and keep a budget. When the data management system receives a new financial transaction description string for a user, the transaction matching module 126 can compare the financial transaction description string to the dictionary in order to identify one or more portions of the financial transaction description string that match one or more key portions, terms, or substrings included in the dictionary. The transaction matching module 126 can identify the merchant involved in financial transactions based on the portions of the financial transaction description string that match key portions, terms, or substrings included in the dictionary. The data management system 112 can then assist the user to sort the financial transaction into the correct budgeting category.

In one embodiment, the dictionary generation model 120 generates the dictionary to identify substrings that assist in identifying one or more of a merchant name, a merchant location, a merchant store number, a transaction date, a transaction time, a transaction payment method, a financial institution involved in the financial transaction, a name of the payer, or other aspects of financial transactions. The data management system can utilize the dictionary to identify one or more characteristics of future financial transaction transactions of users based on comparisons of the financial transaction description strings to the dictionary.

Embodiments of the present disclosure address some of the shortcomings associated with traditional data management systems. Machine learning processes are utilized to assist in identifying key substrings from financial transaction description strings to aid in categorizing future financial transactions. The various embodiments of the disclosure can be implemented to improve the technical fields of data management, data processing, and data transmission. Therefore, the various described embodiments of the disclosure and their associated benefits amount to significantly more than an abstract idea.

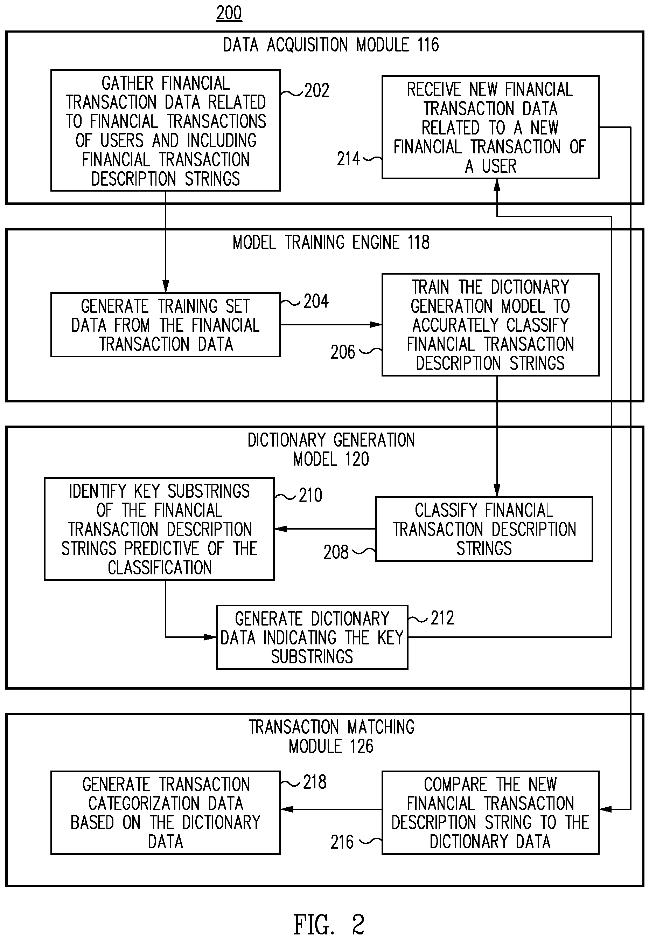

FIG. 2 illustrates a functional flow diagram of a process 200 for identifying predictive characteristics of financial transaction description strings, in accordance with one embodiment.

Referring to FIGs 1-2, and the description of FIG. 1 above, at block 202 the data acquisition module 116 gathers financial transaction data related to financial transactions of users and including financial transaction description strings, using any of the methods, processes, and procedures discussed above with respect to FIGs 1-2, according to one embodiment. From block 202 the process proceeds to block 204.

At block 204 the model training engine 118 generates training set data from the financial transaction data, using any of the methods, processes, and procedures discussed above with respect to FIG. 1, according to one embodiment. From block 204 the process proceeds to block 206.

At block 206 model training engine trains the dictionary generation model to accurately classify financial transaction description strings, using any of the methods, processes, and procedures discussed above with respect to FIG. 1, according to one embodiment. From block 206 the process proceeds to block 208.

At block 208, the dictionary generation model 120 classifies financial transaction description strings, using any of the methods, processes, and procedures discussed above with respect to FIG. 1, according to one embodiment. From block 208 the process proceeds to block 210.

At block 210, the dictionary generation model 120 identifies key substrings of the financial transaction description strings predictive of the classification, processes, and procedures discussed above with respect to FIG. 1, according to one embodiment. From block 210 the process proceeds to block 212.

At block 212 the dictionary generation model 120 generates dictionary data indicating the key substrings from the financial transaction description strings from the training set data, using any of the methods, processes, and procedures discussed above with respect to FIG. 1, according to one embodiment. From block 212 the process proceeds to block 214.

At block 214, the data acquisition module 116 receives new financial transaction data related to a new financial transaction of the user, using any of the methods, processes, and procedures discussed above with respect to FIG. 1, according to one embodiment. From block 214 the process proceeds to block 216.

At block 216, transaction matching module 126 compares the new financial transaction description strings to the dictionary data, using any of the methods, processes, and procedures discussed above with respect to FIG. 1, according to one embodiment. From block 216 the process proceeds to block 218.

At block 218, the transaction matching module 126 generates transaction categorization data based on the dictionary data, using any of the methods, processes, and procedures discussed above with respect to FIG. 1, according to one embodiment.

Those of skill in the art will recognize, in light of the present disclosure, that the process 200 can include different steps and different orders of steps, other than those represented in FIG. 2. All such other processes fall within the scope of the present disclosure.

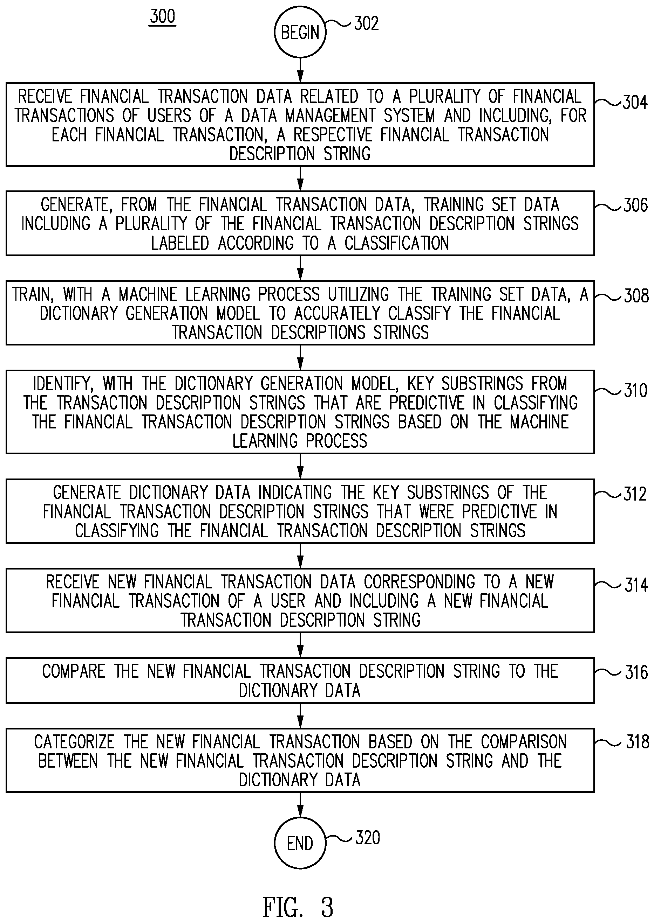

FIG. 3 illustrates a flow diagram of a process 300 for identifying predictive characteristics of financial transaction description strings, according to various embodiments.

Referring to FIGs1-3, and the description of FIGs 1-2 above, in one embodiment, process 300 begins at BEGIN 302 and process flow proceeds to RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 304.

In one embodiment, at RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 304, financial transaction data is received related to a plurality of financial transactions of users of a data management system and including, for each financial transaction, a respective financial transaction description string, using any of the methods, processes, and procedures discussed above with respect to FIGs 1-2.

In one embodiment, once financial transaction data is received related to a plurality of financial transactions of users of a data management system and including, for each financial transaction, a respective financial transaction description string at RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 304 process flow proceeds to GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 306.

In one embodiment, at GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 306, training set data is generated, from the financial transaction data, including a plurality of the financial transaction description strings labeled according to a classification, using any of the methods, processes, and procedures discussed above with respect to FIGs 1-2.

In one embodiment, once training set data is generated, from the financial transaction data, including a plurality of the financial transaction description strings labeled according to a classification at GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 306, process flow proceeds to TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 308.

In one embodiment, at TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 308, a dictionary generation model is trained, with a machine learning process utilizing the training set data, to accurately classify the financial transaction descriptions strings, using any of the methods, processes, and procedures discussed above with respect to FIGs 1-2.

In one embodiment, once a dictionary generation model is trained, with a machine learning process utilizing the training set data, to accurately classify the financial transaction descriptions strings at TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 308, process flow proceeds to IDENTIFY, WITH THE DICTIONARY GENERATION MODEL, KEY SUBSTRINGS FROM THE TRANSACTION DESCRIPTION STRINGS THAT ARE PREDICTIVE IN CLASSIFYING THE FINANCIAL TRANSACTION DESCRIPTION STRINGS BASED ON THE MACHINE LEARNING PROCESS 310.

In one embodiment, at IDENTIFY, WITH THE DICTIONARY GENERATION MODEL, KEY SUBSTRINGS FROM THE TRANSACTION DESCRIPTION STRINGS THAT ARE PREDICTIVE IN CLASSIFYING THE FINANCIAL TRANSACTION DESCRIPTION STRINGS BASED ON THE MACHINE LEARNING PROCESS 310, key substrings are identified, with the dictionary generation model, from the transaction description strings that are predictive in classifying the financial transaction description strings based on the machine learning process, using any of the methods, processes, and procedures discussed above with respect to FIGs 1-2.

In one embodiment, once key substrings are identified, with the dictionary generation model, from the transaction description strings that are predictive in classifying the financial transaction description strings based on the machine learning process at IDENTIFY, WITH THE DICTIONARY GENERATION MODEL, KEY SUBSTRINGS FROM THE TRANSACTION DESCRIPTION STRINGS THAT ARE PREDICTIVE IN CLASSIFYING THE FINANCIAL TRANSACTION DESCRIPTION STRINGS BASED ON THE MACHINE LEARNING PROCESS 310, process flow proceeds to GENERATE DICTIONARY DATA INDICATING THE KEY SUBSTRINGS OF THE FINANCIAL TRANSACTION DESCRIPTION STRINGS THAT WERE PREDICTIVE IN CLASSIFYING THE FINANCIAL TRANSACTION DESCRIPTION STRINGS 312.

In one embodiment, at GENERATE DICTIONARY DATA INDICATING THE KEY SUBSTRINGS OF THE FINANCIAL TRANSACTION DESCRIPTION STRINGS THAT WERE PREDICTIVE IN CLASSIFYING THE FINANCIAL TRANSACTION DESCRIPTION STRINGS 312, dictionary data is generated indicating the key substrings of the financial transaction description strings that were predictive in classifying the financial transaction description strings, using any of the methods, processes, and procedures discussed above with respect to FIGs 1-3.

In one embodiment, once dictionary data is generated indicating the key substrings of the financial transaction description strings that were predictive in classifying the financial transaction description strings at GENERATE DICTIONARY DATA INDICATING THE KEY SUBSTRINGS OF THE FINANCIAL TRANSACTION DESCRIPTION STRINGS THAT WERE PREDICTIVE IN CLASSIFYING THE FINANCIAL TRANSACTION DESCRIPTION STRINGS 312, process flow proceeds RECEIVE NEW FINANCIAL TRANSACTION DATA CORRESPONDING TO A NEW FINANCIAL TRANSACTION OF A USER AND INCLUDING A NEW FINANCIAL TRANSACTION DESCRIPTION STRING 314.

In one embodiment, at RECEIVE NEW FINANCIAL TRANSACTION DATA CORRESPONDING TO A NEW FINANCIAL TRANSACTION OF A USER AND INCLUDING A NEW FINANCIAL TRANSACTION DESCRIPTION STRING 314, new financial transaction data is received corresponding to a new financial transaction of a user and including a new financial transaction description string, using any of the methods, processes, and procedures discussed above with respect to FIGs 1-2.

In one embodiment, once new financial transaction data is received corresponding to a new financial transaction of a user and including a new financial transaction description string, at RECEIVE NEW FINANCIAL TRANSACTION DATA CORRESPONDING TO A NEW FINANCIAL TRANSACTION OF A USER AND INCLUDING A NEW FINANCIAL TRANSACTION DESCRIPTION STRING 314, process flow proceeds COMPARE THE NEW FINANCIAL TRANSACTION DESCRIPTION STRING TO THE DICTIONARY DATA 316.

In one embodiment, at COMPARE THE NEW FINANCIAL TRANSACTION DESCRIPTION STRING TO THE DICTIONARY DATA 316, the new financial transaction description string is compared to the dictionary data, using any of the methods, processes, and procedures discussed above with respect to FIGs 1-2.

In one embodiment, once the new financial transaction description string is compared to the dictionary data at COMPARE THE NEW FINANCIAL TRANSACTION DESCRIPTION STRING TO THE DICTIONARY DATA 316, process flow proceeds CATEGORIZE THE NEW FINANCIAL TRANSACTION BASED ON THE COMPARISON BETWEEN THE NEW FINANCIAL TRANSACTION DESCRIPTION STRING AND THE DICTIONARY DATA 318.

In one embodiment, at CATEGORIZE THE NEW FINANCIAL TRANSACTION BASED ON THE COMPARISON BETWEEN THE NEW FINANCIAL TRANSACTION DESCRIPTION STRING AND THE DICTIONARY DATA 318, the new financial transaction is categorized based on the comparison between the new financial transaction description string and the dictionary data, using any of the methods, processes, and procedures discussed above with respect to FIGs 1-2.

In one embodiment, once the new financial transaction is categorized based on the comparison between the new financial transaction description string and the dictionary data, at CATEGORIZE THE NEW FINANCIAL TRANSACTION BASED ON THE COMPARISON BETWEEN THE NEW FINANCIAL TRANSACTION DESCRIPTION STRING AND THE DICTIONARY DATA 318, process flow proceeds to END 320.

In one embodiment, at END 320 the process for identifying predictive characteristics of financial transaction description strings is exited to await new data and/or instructions.

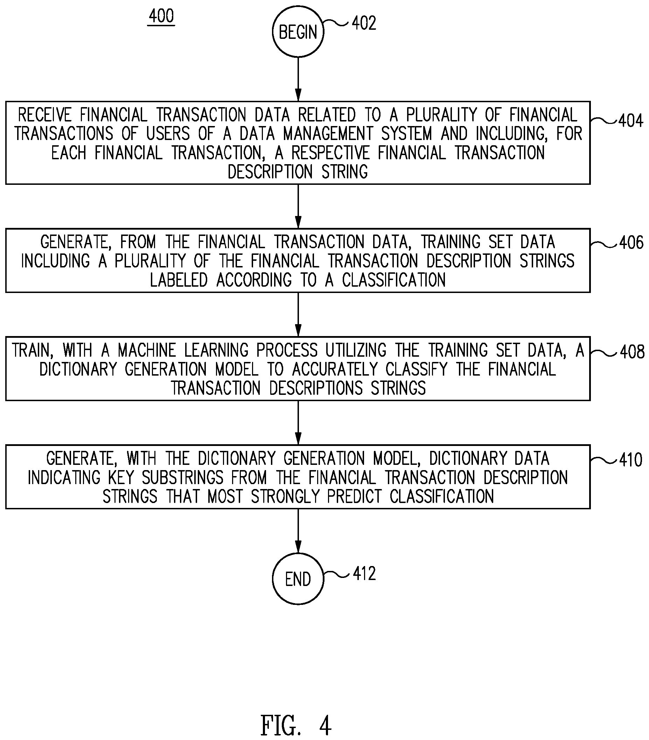

FIG. 4 illustrates a flow diagram of a process 400 for identifying predictive characteristics of financial transaction description strings, according to various examples useful for understanding the invention.

Referring to FIGs 1-2, 4, and the description of FIGs 1-2 above, in one example, process 400 begins at BEGIN 402 and process flow proceeds to RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 404.

In one example, at RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 404, financial transaction data is received related to a plurality of financial transactions of users of a data management system and including, for each financial transaction, a respective financial transaction description string, using any of the methods, processes, and procedures discussed above with respect to FIGs 1-2.

In one example, once financial transaction data is received related to a plurality of financial transactions of users of a data management system and including, for each financial transaction, a respective financial transaction description string at RECEIVE FINANCIAL TRANSACTION DATA RELATED TO A PLURALITY OF FINANCIAL TRANSACTIONS OF USERS OF A DATA MANAGEMENT SYSTEM AND INCLUDING, FOR EACH FINANCIAL TRANSACTION, A RESPECTIVE FINANCIAL TRANSACTION DESCRIPTION STRING 404 process flow proceeds to GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 406.

In one example, at GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 406, training set data is generated, from the financial transaction data, including a plurality of the financial transaction description strings labeled according to a classification, using any of the methods, processes, and procedures discussed above with respect to FIGs 1-2.

In one example, once training set data is generated, from the financial transaction data, including a plurality of the financial transaction description strings labeled according to a classification at GENERATE, FROM THE FINANCIAL TRANSACTION DATA, TRAINING SET DATA INCLUDING A PLURALITY OF THE FINANCIAL TRANSACTION DESCRIPTION STRINGS LABELED ACCORDING TO A CLASSIFICATION 406, process flow proceeds to TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 408.

In one example, at TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 408, a dictionary generation model is trained, with a machine learning process utilizing the training set data, to accurately classify the financial transaction descriptions strings, using any of the methods, processes, and procedures discussed above with respect to FIGs 1-2.

In one example, once a dictionary generation model is trained, with a machine learning process utilizing the training set data, to accurately classify the financial transaction descriptions strings at TRAIN, WITH A MACHINE LEARNING PROCESS UTILIZING THE TRAINING SET DATA, A DICTIONARY GENERATION MODEL TO ACCURATELY CLASSIFY THE FINANCIAL TRANSACTION DESCRIPTIONS STRINGS 408, process flow proceeds to GENERATE, WITH THE DICTIONARY GENERATION MODEL, DICTIONARY DATA INDICATING KEY SUBSTRINGS FROM THE FINANCIAL TRANSACTION DESCRIPTION STRINGS THAT MOST STRONGLY PREDICT CLASSIFICATION 410.

In one example, at GENERATE, WITH THE DICTIONARY GENERATION MODEL, DICTIONARY DATA INDICATING KEY SUBSTRINGS FROM THE FINANCIAL TRANSACTION DESCRIPTION STRINGS THAT MOST STRONGLY PREDICT CLASSIFICATION 410, dictionary data is generated, with the dictionary generation model, indicating key substrings from the financial transaction description strings that most strongly predict classification, using any of the methods, processes, and procedures discussed above with respect to FIGs 1-2.

In one example, once dictionary data is generated, with the dictionary generation model, indicating key substrings from the financial transaction description strings that most strongly predict classification at GENERATE, WITH THE DICTIONARY GENERATION MODEL, DICTIONARY DATA INDICATING KEY SUBSTRINGS FROM THE FINANCIAL TRANSACTION DESCRIPTION STRINGS THAT MOST STRONGLY PREDICT CLASSIFICATION 410, process flow proceeds to END 412.

In one example, at END 412 the process for identifying predictive characteristics of financial transaction description strings is exited to await new data and/or instructions.

As noted above, the specific illustrative examples discussed above are but illustrative examples of implementations of embodiments of the method or process for identifying predictive characteristics of financial transaction description strings. Those of skill in the art will readily recognize that other implementations and embodiments are possible. Therefore, the discussion above should not be construed as a limitation on the claims provided below.

In one embodiment, a computing system implemented method identifies characteristics of financial transaction description strings. The method includes receiving financial transaction data related to a plurality of financial transactions of users of a data management system and including, for each financial transaction, a respective financial transaction description string and generating, from the financial transaction data, training set data including a plurality of the financial transaction description strings labeled according to a classification. The method includes training, with a machine learning process utilizing the training set data, a dictionary generation model to accurately classify the financial transaction descriptions strings, identifying, with the dictionary generation model, key substrings from the transaction description strings that are predictive in classifying the financial transaction description strings based on the machine learning process, and generating dictionary data indicating the key substrings of the financial transaction description strings that were predictive in classifying the financial transaction description strings. The method includes receiving new financial transaction data corresponding to a new financial transaction of a user and including a new financial transaction description string, comparing the new financial transaction description string to the dictionary data, categorizing the new financial transaction based on the comparison between the new financial transaction description string and the dictionary data.

In one embodiment, a system for identifying predictive characteristics of financial transaction description strings, the system includes at least one processor at least one memory coupled to the at least one processor. The at least one memory has stored therein instructions which, when executed by any set of the one or more processors, perform a process. The process includes receiving financial transaction data related to a plurality of financial transactions of users of a data management system and including, for each financial transaction, a respective financial transaction description string and generating, from the financial transaction data, training set data including a plurality of the financial transaction description strings labeled according to a classification. The process includes training, with a machine learning process utilizing the training set data, a dictionary generation model to accurately classify the financial transaction descriptions strings, identifying, with the dictionary generation model, key substrings from the transaction description strings that are predictive in classifying the financial transaction description strings based on the machine learning process, and generating dictionary data indicating the key substrings of the financial transaction description strings that were predictive in classifying the financial transaction description strings. The process includes receiving new financial transaction data corresponding to a new financial transaction of a user and including a new financial transaction description string, comparing the new financial transaction description string to the dictionary data, categorizing the new financial transaction based on the comparison between the new financial transaction description string and the dictionary data.

In one embodiment, a computing system implemented method identifies characteristics of financial transaction description strings. The method includes receiving financial transaction data related to a plurality of financial transactions of users of a data management system and including, for each financial transaction, a respective financial transaction description string and generating, from the financial transaction data, training set data including a plurality of the financial transaction description strings labeled according to a classification. The method includes training, with a machine learning process utilizing the training set data, a dictionary generation model to accurately classify the financial transaction descriptions strings and generating, with the dictionary generation model, dictionary data indicating key substrings from the financial transaction description strings that most strongly predict classification.

In one embodiment, a system for identifying predictive characteristics of financial transaction description strings, the system includes at least one processor at least one memory coupled to the at least one processor. The at least one memory has stored therein instructions which, when executed by any set of the one or more processors, perform a process. The process includes receiving financial transaction data related to a plurality of financial transactions of users of a data management system and including, for each financial transaction, a respective financial transaction description string and generating, from the financial transaction data, training set data including a plurality of the financial transaction description strings labeled according to a classification. The process includes training, with a machine learning process utilizing the training set data, a dictionary generation model to accurately classify the financial transaction descriptions strings and generating, with the dictionary generation model, dictionary data indicating key substrings from the financial transaction description strings that most strongly predict classification.

In one embodiment, a computing system implemented method identifies characteristics of financial transaction description strings. The method includes receiving financial transaction data related to a plurality of financial transactions of users of a data management system and including, for each financial transaction, a respective financial transaction description string and generating, from the financial transaction data, a plurality of training sets each including a plurality of the financial transaction description strings labeled according to a classification. The method includes training, with a machine learning process utilizing the training set data, a dictionary generation model to accurately classify the financial transaction descriptions strings, identifying, with the dictionary generation model, key substrings from the transaction description strings that are predictive in classifying the financial transaction description strings based on the machine learning process, and generating, for each training set, a respective dictionary indicating the key substrings of the financial transaction description strings that were predictive in classifying the financial transaction description strings.

In one embodiment, a system for identifying predictive characteristics of financial transaction description strings, the system includes at least one processor at least one memory coupled to the at least one processor. The at least one memory has stored therein instructions which, when executed by any set of the one or more processors, perform a process. The process includes receiving financial transaction data related to a plurality of financial transactions of users of a data management system and including, for each financial transaction, a respective financial transaction description string and generating, from the financial transaction data, a plurality of training sets each including a plurality of the financial transaction description strings labeled according to a classification. The process includes training, with a machine learning process utilizing the training set data, a dictionary generation model to accurately classify the financial transaction descriptions strings, identifying, with the dictionary generation model, key substrings from the transaction description strings that are predictive in classifying the financial transaction description strings based on the machine learning process, and generating, for each training set, a respective dictionary indicating the key substrings of the financial transaction description strings that were predictive in classifying the financial transaction description strings.

The disclosed embodiments provide one or more technical solutions to the technical problem of understanding financial transaction description strings. These and other embodiments of the data management system are discussed in further detail below.

Utilizing machine learning processes to better understand financial transaction description strings is a technical solution to a long-standing technical problem and is not an abstract idea for at least a few reasons. First, utilizing machine learning processes to better understand financial transaction description strings is not an abstract idea because it is not merely an idea itself (e.g., can be performed mentally or using pen and paper). Second, utilizing machine learning processes to better understand financial transaction description strings is not an abstract idea because it is not a fundamental economic practice (e.g., is not merely creating a contractual relationship, hedging, mitigating a settlement risk, etc.). Third, utilizing machine learning processes to better understand financial transaction description strings is not an abstract idea because it is not a method of organizing human activity (e.g., managing a game of bingo). Fourth, although mathematics may be used to generate an analytics model, the disclosed and claimed methods and systems of utilizing machine learning processes to better understand financial transaction description strings are not an abstract idea because the methods and systems are not simply a mathematical relationship/formula.

Utilizing machine learning processes to better understand financial transaction description strings is not an abstract idea because utilizing machine learning processes to better understand financial transaction description strings yields significant improvement to the technical fields of electronic financial management, data processing, user experience, customer service, and customer retention, according to one embodiment. The present disclosure adds significantly to the field of electronic financial management because the disclosed data management system increases the knowledge of the needs and purposes of users of the data management system, increases the ability of the data management system to provide automated assistance in sorting, grouping and categorizing financial transactions, increases the likelihood of improving/maintaining a user's trust in the data management system; and reduces the amount of time users spend managing their finances, according to one embodiment.

As a result, embodiments of the present disclosure allow for reduced use of processor cycles, memory, and power consumption, by reducing the efforts needed to correct problems encountered by users when they are unable to identify merchants involved in their past financial transactions. Consequently, computing and communication systems implementing or providing the embodiments of the present disclosure are transformed into more operationally efficient devices and systems.
In addition to improving overall computing performance, utilizing machine learning processes to better understand financial transaction description strings significantly improves the field of data management systems by reducing the amount of time it takes for a user to sort financial transactions, according to one embodiment. Therefore, both human and non-human resources are utilized more efficiently. Furthermore, by utilizing machine learning processes to better understand financial transaction description strings, loyalty in the data management system is increased. This results in repeat customers, efficient financial management services, and reduced abandonment of use of the data management system, according to one embodiment.

Herein, the term "production environment" includes the various components, or assets, used to deploy, implement, access, and use, a given application as that application is intended to be used. In various embodiments, production environments include multiple assets that are combined, communicatively coupled, virtually and/or physically connected, and/or associated with one another, to provide the production environment implementing the application.

As specific illustrative examples, the assets making up a given production environment can include, but are not limited to, one or more computing environments used to implement the application in the production environment such as a data center, a cloud computing environment, a dedicated hosting environment, and/or one or more other computing environments in which one or more assets used by the application in the production environment are implemented; one or more computing systems or computing entities used to implement the application in the production environment; one or more virtual assets used to implement the application in the production environment; one or more supervisory or control systems, such as hypervisors, or other monitoring and management systems, used to monitor and control assets and/or components of the production environment; one or more communications channels for sending and receiving data used to implement the application in the production environment; one or more access control systems for limiting access to various components of the production environment, such as firewalls and gateways; one or more traffic and/or routing systems used to direct, control, and/or buffer, data traffic to components of the production environment, such as routers and switches; one or more communications endpoint proxy systems used to buffer, process, and/or direct data traffic, such as load balancers or buffers; one or more secure communication protocols and/or endpoints used to encrypt/decrypt data, such as Secure Sockets Layer (SSL) protocols, used to implement the application in the production environment; one or more databases used to store data in the production environment; one or more internal or external services used to implement the application in the production environment; one or more backend systems, such as backend servers or other hardware used to process data and implement the application in the production environment; one or more software systems used to implement the application in the production environment; and/or any other assets/components making up an actual production environment in which an application is deployed, implemented, accessed, and run, e.g., operated, as discussed herein, and/or as known in the art at the time of filing, and/or as developed after the time of filing.

As used herein, the terms "computing system", "computing device", and "computing entity", include, but are not limited to, a virtual asset; a server computing system; a workstation; a desktop computing system; a mobile computing system, including, but not limited to, smart phones, portable devices, and/or devices worn or carried by a user; a database system or storage cluster; a switching system; a router; any hardware system; any communications system; any form of proxy system; a gateway system; a firewall system; a load balancing system; or any device, subsystem, or mechanism that includes components that can execute all, or part, of any one of the processes and/or operations as described herein.

In addition, as used herein, the terms computing system and computing entity, can denote, but are not limited to, systems made up of multiple: virtual assets; server computing systems; workstations; desktop computing systems; mobile computing systems; database systems or storage clusters; switching systems; routers; hardware systems; communications systems; proxy systems; gateway systems; firewall systems; load balancing systems; or any devices that can be used to perform the processes and/or operations as described herein.

As used herein, the term "computing environment" includes, but is not limited to, a logical or physical grouping of connected or networked computing systems and/or virtual assets using the same infrastructure and systems such as, but not limited to, hardware systems, software systems, and networking/communications systems. Typically, computing environments are either known environments, e.g., "trusted" environments, or unknown, e.g., "untrusted" environments. Typically, trusted computing environments are those where the assets, infrastructure, communication and networking systems, and security systems associated with the computing systems and/or virtual assets making up the trusted computing environment, are either under the control of, or known to, a party.

In various embodiments, each computing environment includes allocated assets and virtual assets associated with, and controlled or used to create, and/or deploy, and/or operate an application.

In various embodiments, one or more cloud computing environments are used to create, and/or deploy, and/or operate an application that can be any form of cloud computing environment, such as, but not limited to, a public cloud; a private cloud; a virtual private network (VPN); a subnet; a Virtual Private Cloud (VPC); a sub-net or any security/communications grouping; or any other cloud-based infrastructure, sub-structure, or architecture, as discussed herein, and/or as known in the art at the time of filing, and/or as developed after the time of filing.

In many cases, a given application or service may utilize, and interface with, multiple cloud computing environments, such as multiple VPCs, in the course of being created, and/or deployed, and/or operated.

As used herein, the term "virtual asset" includes any virtualized entity or resource, and/or virtualized part of an actual, or "bare metal" entity. In various embodiments, the virtual assets can be, but are not limited to, virtual machines, virtual servers, and instances implemented in a cloud computing environment; databases associated with a cloud computing environment, and/or implemented in a cloud computing environment; services associated with, and/or delivered through, a cloud computing environment; communications systems used with, part of, or provided through, a cloud computing environment; and/or any other virtualized assets and/or sub-systems of "bare metal" physical devices such as mobile devices, remote sensors, laptops, desktops, point-of-sale devices, etc., located within a data center, within a cloud computing environment, and/or any other physical or logical location, as discussed herein, and/or as known/available in the art at the time of filing, and/or as developed/made available after the time of filing.

In various embodiments, any, or all, of the assets making up a given production environment discussed herein, and/or as known in the art at the time of filing, and/or as developed after the time of filing, can be implemented as one or more virtual assets.

In one embodiment, two or more assets, such as computing systems and/or virtual assets, and/or two or more computing environments, are connected by one or more communications channels including but not limited to, Secure Sockets Layer communications channels and various other secure communications channels, and/or distributed computing system networks, such as, but not limited to: a public cloud; a private cloud; a virtual private network (VPN); a subnet; any general network, communications network, or general network/communications network system; a combination of different network types; a public network; a private network; a satellite network; a cable network; or any other network capable of allowing communication between two or more assets, computing systems, and/or virtual assets, as discussed herein, and/or available or known at the time of filing, and/or as developed after the time of filing.

As used herein, the term "network" includes, but is not limited to, any network or network system such as, but not limited to, a peer-to-peer network, a hybrid peer-to-peer network, a Local Area Network (LAN), a Wide Area Network (WAN), a public network, such as the Internet, a private network, a cellular network, any general network, communications network, or general network/communications network system; a wireless network; a wired network; a wireless and wired combination network; a satellite network; a cable network; any combination of different network types; or any other system capable of allowing communication between two or more assets, virtual assets, and/or computing systems, whether available or known at the time of filing or as later developed.

As used herein, the term "user" includes, but is not limited to, any party, parties, entity, and/or entities using, or otherwise interacting with any of the methods or systems discussed herein. For instance, in various embodiments, a user can be, but is not limited to, a person, a commercial entity, an application, a service, and/or a computing system.

As used herein, the term "relationship(s)" includes, but is not limited to, a logical, mathematical, statistical, or other association between one set or group of information, data, and/or users and another set or group of information, data, and/or users, according to one embodiment. The logical, mathematical, statistical, or other association (i.e., relationship) between the sets or groups can have various ratios or correlation, such as, but not limited to, one-to-one, multiple-to-one, one-to-multiple, multiple-to-multiple, and the like, according to one embodiment. As a non-limiting example, if the disclosed system and method for providing access control and enhanced encryption determines a relationship between a first group of data and a second group of data, then a characteristic or subset of a first group of data can be related to, associated with, and/or correspond to one or more characteristics or subsets of the second group of data, or vice-versa, according to one embodiment. Therefore, relationships may represent one or more subsets of the second group of data that are associated with one or more subsets of the first group of data, according to one embodiment. In one embodiment, the relationship between two sets or groups of data includes, but is not limited to similarities, differences, and correlations between the sets or groups of data.

As used herein, the term storage container includes, but is not limited to, any physical or virtual data source or storage device. For instance, in various embodiments, a storage container can be, but is not limited to, one or more of a hard disk drive, a solid-state drive, an EEPROM, an optical disk, a server, a memory array, a database, a virtual database, a virtual memory, a virtual data directory, or other physical or virtual data sources.

As used herein, the term application container includes, but is not limited to, one or more profiles or other data sets that allow users and processes to access only particular data within a file system related to a storage container. For instance, in various embodiments, an application container can include, but is not limited to, a set of rules, a list of files, a list of processes, and/or encryption keys that provide access control to a file system such that a user associated with the application container can only access data, files, objects or other portions of a file system in accordance with the set of rules, the list of files, the list of processes, and/or encryptions keys.

As used herein, the term file includes, but is not limited to, a data entity that is a sequence of bytes that can be accessed individually or collectively.

As used herein the term data object includes, but is not limited to, a data entity that is stored and retrieved as a whole, or in large chunks, rather than as a sequence of bytes.

In the discussion above, certain aspects of one embodiment include process steps and/or operations and/or instructions described herein for illustrative purposes in a particular order and/or grouping. However, the particular order and/or grouping shown and discussed herein are illustrative only and not limiting. Those of skill in the art will recognize that other orders and/or grouping of the process steps and/or operations and/or instructions are possible and, in some embodiments, one or more of the process steps and/or operations and/or instructions discussed above can be combined and/or deleted. In addition, portions of one or more of the process steps and/or operations and/or instructions can be re-grouped as portions of one or more other of the process steps and/or operations and/or instructions discussed herein. Consequently, the particular order and/or grouping of the process steps and/or operations and/or instructions discussed herein do not limit the scope of the invention as claimed below.

As discussed in more detail above, using the above embodiments, with little or no modification and/or input, there is considerable flexibility, adaptability, and opportunity for customization to meet the specific needs of various parties under numerous circumstances.

In the discussion above, certain aspects of one embodiment include process steps and/or operations and/or instructions described herein for illustrative purposes in a particular order and/or grouping. However, the particular order and/or grouping shown and discussed herein are illustrative only and not limiting. Those of skill in the art will recognize that other orders and/or grouping of the process steps and/or operations and/or instructions are possible and, in some embodiments, one or more of the process steps and/or operations and/or instructions discussed above can be combined and/or deleted. In addition, portions of one or more of the process steps and/or operations and/or instructions can be re-grouped as portions of one or more other of the process steps and/or operations and/or instructions discussed herein. Consequently, the particular order and/or grouping of the process steps and/or operations and/or instructions discussed herein do not limit the scope of the invention as claimed below.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, or protocols. Further, the system or functionality of the invention may be implemented via various combinations of software and hardware, as described, or entirely in hardware elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Some portions of the above description present the features of the present invention in terms of algorithms and symbolic representations of operations, or algorithm-like representations, of operations on information/data. These algorithmic or algorithm-like descriptions and representations are the means used by those of skill in the art to most effectively and efficiently convey the substance of their work to others of skill in the art. These operations, while described functionally or logically, are understood to be implemented by computer programs or computing systems. Furthermore, it has also proven convenient at times to refer to these arrangements of operations as steps or modules or by functional names, without loss of generality.

Unless specifically stated otherwise, as would be apparent from the above discussion, it is appreciated that throughout the above description, discussions utilizing terms such as, but not limited to, "activating", "accessing", "adding", "aggregating", "alerting", "applying", "analyzing", "associating", "calculating", "capturing", "categorizing", "classifying", "comparing", "creating", "defining", "detecting", "determining", "distributing", "eliminating", "encrypting", "extracting", "filtering", "forwarding", "generating", "identifying", "implementing", "informing", "monitoring", "obtaining", "posting", "processing", "providing", "receiving", "requesting", "saving", "sending", "storing", "substituting", "transferring", "transforming", "transmitting", "using", etc., refer to the action and process of a computing system or similar electronic device that manipulates and operates on data represented as physical (electronic) quantities within the computing system memories, resisters, caches or other information storage, transmission or display devices.

The present invention also relates to an apparatus or system for performing the operations described herein. This apparatus or system may be specifically constructed for the required purposes, or the apparatus or system can comprise a general-purpose system selectively activated or configured/reconfigured by a computer program stored on a computer program product as discussed herein that can be accessed by a computing system or other device.

Those of skill in the art will readily recognize that the algorithms and operations presented herein are not inherently related to any particular computing system, computer architecture, computer or industry standard, or any other specific apparatus. Various general-purpose systems may also be used with programs in accordance with the teaching herein, or it may prove more convenient/efficient to construct more specialized apparatuses to perform the required operations described herein. The required structure for a variety of these systems will be apparent to those of skill in the art, along with equivalent variations. In addition, the present invention is not described with reference to any particular programming language and it is appreciated that a variety of programming languages may be used to implement the teachings of the present invention as described herein, and any references to a specific language or languages are provided for illustrative purposes only and for enablement of the contemplated best mode of the invention at the time of filing.

The present invention is well suited to a wide variety of computer network systems operating over numerous topologies. Within this field, the configuration and management of large networks comprise storage devices and computers that are communicatively coupled to similar or dissimilar computers and storage devices over a private network, a LAN, a WAN, a private network, or a public network, such as the Internet.

It should also be noted that the language used in the specification has been principally selected for readability, clarity and instructional purposes, and may not have been selected to delineate or circumscribe the inventive subject matter. Accordingly, the disclosure of the present invention is intended to be illustrative, but not limiting, of the scope of the invention, which is set forth in the claims below.

In addition, the operations shown in the FIG.s, or as discussed herein, are identified using a particular nomenclature for ease of description and understanding, but other nomenclature is often used in the art to identify equivalent operations.

Therefore, numerous variations, whether explicitly provided for by the specification or implied by the specification or not, may be implemented by one of skill in the art in view of this disclosure.

## Claims

1. A computing system implemented method for identifying predictive characteristics of financial transaction description strings, the method comprising:
receiving financial transaction data related to a plurality of financial transactions of users of a data management system and including, for each financial transaction, a respective financial transaction description string;
generating, from the financial transaction data, training set data including a plurality of the financial transaction description strings labeled according to a classification;
training, with a machine learning process utilizing the training set data, a dictionary generation model to classify the financial transaction descriptions strings from the training data set;
identifying, using the dictionary generation model, key substrings from the transaction description strings that are most predictive in classifying the financial transaction description strings based on the machine learning process,
wherein identifying the key substrings includes analyzing, for each financial
transaction description string from the training set data, a predictive power of each of a plurality of n-grams from the financial transaction description string;
generating a dictionary of the key substrings and corresponding classifications of the financial transaction description strings that were most predictive in classifying the financial transaction description strings;
receiving new financial transaction data corresponding to a new financial transaction of a user and including a new financial transaction description string;
comparing the new financial transaction description string to the dictionary; and
categorizing the new financial transaction based on the comparison between the new financial transaction description string and the dictionary.

2. The method of claim 1, wherein comparing the new financial transaction description string to the dictionary includes identifying one or more key substrings from the dictionary that match one or more portions of the new financial transaction description string.

3. The method of claim 2, further comprising categorizing the new financial transaction based on the one or more key substrings from the dictionary that match the one or more portions of the new financial transaction description string.

4. The method of claim 3, wherein generating the dictionary includes identifying, for each key substring, a respective score indicating the predictive power of the key substring.

5. The method of claim 4, further comprising categorizing the new financial transaction based on one or more matching key substrings with a highest score.

6. The method of claim 1, wherein the machine learning process is a supervised machine learning process.

7. The method of claim 1, wherein the dictionary generation model includes a recurrent neural network.

8. The method of claim 7, wherein the dictionary generation model includes an attention based recurrent neural network.

9. The method of claim 8, wherein the data management system includes one or more of:
a bookkeeping system;
a tax return preparation system; and
a budgeting system.

10. The method of claim 1, wherein the training set data is classified according to a merchant involved in the financial transaction.

11. The method of claim 10, wherein categorizing the new financial transaction includes identifying a merchant involved in the new financial transaction based on the comparison with the dictionary.

12. A system for identifying predictive characteristics of financial transaction description strings, the system comprising:
at least one processor; and
at least one memory coupled to the at least one processor, the at least one memory having stored therein instructions which, when executed by any set of the one or more processors, perform a process including:
receiving financial transaction data related to a plurality of financial transactions of users of a data management system and including, for each financial transaction, a respective financial transaction description string;
generating, from the financial transaction data, training set data including a plurality of the financial transaction description strings labeled according to a classification;
training, with a machine learning process utilizing the training set data, a dictionary generation model to classify the financial transaction descriptions strings from the training data set;
identifying, using the dictionary generation model, key substrings from the transaction description strings that are most predictive in classifying the financial transaction description strings based on the machine learning process,
wherein identifying the key substrings includes analyzing, for each financial
transaction description string from the training set data, a predictive power of each of a plurality of n-grams from the financial transaction description string;
generating a dictionary of the key substrings and corresponding classifications of the financial transaction description strings that were most predictive in classifying the financial transaction description strings;
receiving new financial transaction data corresponding to a new financial transaction of a user and including a new financial transaction description string;
comparing the new financial transaction description string to the dictionary; and
categorizing the new financial transaction based on the comparison between the new financial transaction description string and the dictionary.

13. The system of claim 12, wherein comparing the new financial transaction description string to the dictionary includes identifying one or more key substrings from the dictionary that match one or more portions of the new financial transaction description string.

14. The system of claim 12, wherein some of the n-grams from a financial transaction description string overlap each other.

## Patentansprüche

1. Verfahren, das durch ein Rechensystem implementiert wird, zum Identifizieren prädiktiver Charakteristiken von Finanztransaktions-Beschreibungszeichenfolgen, wobei das Verfahren umfasst:
Empfangen von Finanztransaktionsdaten bezüglich einer Vielzahl von Finanztransaktionen von Benutzern eines Datenmanagementsystems und einschließlich, für jede Finanztransaktion, einer jeweiligen Finanztransaktions-Beschreibungszeichenfolge;
Erzeugen, aus den Finanztransaktionsdaten, von Trainingssatzdaten, die eine Vielzahl der Finanztransaktions-Beschreibungszeichenfolgen beinhalten, die gemäß einer Klassifizierung gelabelt sind;
Trainieren, mit einem Maschinenlernprozess, der die Trainingssatzdaten nutzt, eines Wörterbucherzeugungsmodells, um die Finanztransaktions-Beschreibungszeichenfolgen aus dem Trainingsdatensatz zu klassifizieren;
Identifizieren, unter Verwendung des Wörterbucherzeugungsmodells, von Schlüsselteilzeichenfolgen aus den Transkations-Beschreibungszeichenfolgen, die für das Klassifizieren der Finanztransaktions-Beschreibungszeichenfolgen am prädiktivsten sind, basierend auf dem Maschinenlernprozess,
wobei das Identifizieren der Schlüsselteilzeichenfolgen das Analysieren, für jede Finanztransaktions-Beschreibungszeichenfolge aus dem Trainingsdatensatz,
einer prädiktiven Kraft von jedem einer Vielzahl von n-Grammen aus der Finanztransaktions-Beschreibungszeichenfolge beinhaltet;
Erzeugen eines Wörterbuchs der Schlüsselteilzeichenfolgen und entsprechender Klassifizierungen der Finanztransaktions-Beschreibungszeichenfolgen, die für das Klassifizieren der Finanztransaktions-Beschreibungszeichenfolgen am prädiktivsten waren;
Empfangen neuer Finanztransaktionsdaten, die einer neuen Finanztransaktion eines Benutzers entsprechen und eine neue Finanztransaktions-Beschreibungszeichenfolge einschließen;
Vergleichen der neuen Finanztransaktions-Beschreibungszeichenfolge mit dem Wörterbuch; und
Kategorisieren der neuen Finanztransaktion basierend auf dem Vergleich zwischen der neuen Finanztransaktions-Beschreibungszeichenfolge und dem Wörterbuch.

2. Verfahren nach Anspruch 1, wobei das Vergleichen der neuen Finanztransaktions-Beschreibungszeichenfolge mit dem Wörterbuch das Identifizieren einer oder mehrerer Schlüsselteilzeichenfolgen aus dem Wörterbuch beinhaltet, die mit einem oder mehreren Abschnitten der neuen Finanztransaktions-Beschreibungszeichenfolge übereinstimmen.

3. Verfahren nach Anspruch 2, ferner umfassend Kategorisieren der neuen Finanztransaktion basierend auf der einen oder den mehreren Schlüsselteilzeichenfolgen aus dem Wörterbuch, die mit dem einen oder den mehreren Abschnitten der neuen Finanztransaktions-Beschreibungszeichenfolge übereinstimmen.

4. Verfahren nach Anspruch 3, wobei das Erzeugen des Wörterbuchs das Identifizieren, für jede Schlüsselteilzeichenfolge, einer jeweiligen Bewertung beinhaltet, die die prädiktive Kraft der Schlüsselteilzeichenfolge angibt.

5. Verfahren nach Anspruch 4, ferner umfassend Kategorisieren der neuen Finanztransaktion basierend auf einer oder mehreren übereinstimmenden Schlüsselteilzeichenfolgen mit einer höchsten Bewertung.

6. Verfahren nach Anspruch 1, wobei der Maschinenlernprozess ein überwachter Maschinenlernprozess ist.

7. Verfahren nach Anspruch 1, wobei das Wörterbucherzeugungsmodell ein rekurrentes neuronales Netzwerk einschließt.

8. Verfahren nach Anspruch 7, wobei das Wörterbucherzeugungsmodell ein Attention-basiertes rekurrentes neuronales Netzwerk einschließt.

9. Verfahren nach Anspruch 8, wobei das Datenmanagementsystem eines oder mehrere von Folgendem beinhaltet:
ein Buchhaltungssystem;
ein System zur Erstellung von Steuererklärungen; und
ein Budgetierungssystem.

10. Verfahren nach Anspruch 1, wobei die Trainingssatzdaten gemäß einem Händler klassifiziert werden, der an der Finanztransaktion beteiligt ist.

11. Verfahren nach Anspruch 10, wobei das Kategorisieren der neuen Finanztransaktion das Identifizieren eines Händlers, der an der neuen Finanztransaktion beteiligt ist, basierend auf dem Vergleich mit dem Wörterbuch beinhaltet.

12. System zum Identifizieren prädiktiver Charakteristiken von Finanztransaktions-Beschreibungszeichenfolgen, wobei das System umfasst:
mindestens einen Prozessor; und
mindestens einen Speicher, der mit dem mindestens einen Prozessor gekoppelt ist, wobei in dem mindestens einen Speicher Anweisungen gespeichert sind, die, wenn sie von einem beliebigen Satz des einen oder der mehreren Prozessoren ausgeführt werden, einen Prozess durchführen, der beinhaltet:
Empfangen von Finanztransaktionsdaten bezüglich einer Vielzahl von Finanztransaktionen von Benutzern eines Datenmanagementsystems und einschließlich, für jede Finanztransaktion, einer jeweiligen Finanztransaktions-Beschreibungszeichenfolge;
Erzeugen, aus den Finanztransaktionsdaten, von Trainingssatzdaten, die eine Vielzahl der Finanztransaktions-Beschreibungszeichenfolgen beinhalten, die gemäß einer Klassifizierung gelabelt sind;
Trainieren, mit einem Maschinenlernprozess, der die Trainingssatzdaten nutzt, eines Wörterbucherzeugungsmodells, um die Finanztransaktions-Beschreibungszeichenfolgen aus dem Trainingsdatensatz zu klassifizieren;
Identifizieren, unter Verwendung des Wörterbucherzeugungsmodells, von Schlüsselteilzeichenfolgen aus den Transkations-Beschreibungszeichenfolgen, die für das Klassifizieren der Finanztransaktions-Beschreibungszeichenfolgen am prädiktivsten sind, basierend auf dem Maschinenlernprozess,
wobei das Identifizieren der Schlüsselteilzeichenfolgen das Analysieren, für jede Finanztransaktions-Beschreibungszeichenfolge aus dem Trainingsdatensatz, einer prädiktiven Kraft von jedem einer Vielzahl von n-Grammen aus der Finanztransaktions-Beschreibungszeichenfolge beinhaltet;
Erzeugen eines Wörterbuchs der Schlüsselteilzeichenfolgen und entsprechender Klassifizierungen der Finanztransaktions-Beschreibungszeichenfolgen, die für das Klassifizieren der Finanztransaktions-Beschreibungszeichenfolgen am prädiktivsten waren;
Empfangen neuer Finanztransaktionsdaten, die einer neuen Finanztransaktion eines Benutzers entsprechen und eine neue Finanztransaktions-Beschreibungszeichenfolge einschließen;
Vergleichen der neuen Finanztransaktions-Beschreibungszeichenfolge mit dem Wörterbuch; und
Kategorisieren der neuen Finanztransaktion basierend auf dem Vergleich zwischen der neuen Finanztransaktions-Beschreibungszeichenfolge und dem Wörterbuch.

13. System nach Anspruch 12, wobei das Vergleichen der neuen Finanztransaktions-Beschreibungszeichenfolge mit dem Wörterbuch das Identifizieren einer oder mehrerer Schlüsselteilzeichenfolgen aus dem Wörterbuch beinhaltet, die mit einem oder mehreren Abschnitten der neuen Finanztransaktions-Beschreibungszeichenfolge übereinstimmen.

14. System nach Anspruch 12, wobei einige der n-Gramme von einer Finanztransaktions-Beschreibungszeichenfolge einander überlappen.

## Revendications

1. Procédé, mis en œuvre par un système informatique, d'identification de caractéristiques prédictives de chaînes de description de transaction financière, le procédé comprenant :
la réception de données de transactions financières liées à une pluralité de transactions financières d'utilisateurs d'un système de gestion de données et comportant, pour chaque transaction financière, une chaîne de description de transaction financière respective ;
la génération, à partir des données de transaction financière, de données d'ensemble d'entraînement comportant une pluralité des chaînes de description de transaction financière étiquetées selon une classification ;
l'entraînement, au moyen d'un processus d'apprentissage machine utilisant les données d'ensemble d'entraînement, d'un modèle de génération de dictionnaire afin de classifier les chaînes de description de transaction financière issues de l'ensemble de données d'entraînement ;
l'identification, à l'aide du modèle de génération de dictionnaire, de sous-chaînes clés issues des chaînes de description de transaction qui sont les plus prédictives dans la classification des chaînes de description de transaction financière sur la base du processus d'apprentissage machine,
l'identification des sous-chaînes clés comportant l'analyse, pour chaque chaîne de description de transaction financière issue des données d'ensemble d'entraînement, d'une puissance prédictive de chacun d'une pluralité de n-grammes issus de la chaîne de description de transaction financière ;
la génération d'un dictionnaire des sous-chaînes clés et de classifications correspondantes des chaînes de description de transaction financière qui étaient les plus prédictives dans la classification des chaînes de description de transaction financière ;
la réception de nouvelles données de transaction financière correspondant à une nouvelle transaction financière d'un utilisateur et comportant une nouvelle chaîne de description de transaction financière ;
la comparaison de la nouvelle chaîne de description de transaction financière au dictionnaire ; et
la catégorisation de la nouvelle transaction financière sur la base de la comparaison entre la nouvelle chaîne de description de transaction financière et le dictionnaire.

2. Procédé selon la revendication 1, la comparaison de la nouvelle chaîne de description de transaction financière au dictionnaire comportant l'identification d'une ou de plusieurs sous-chaînes clés issues du dictionnaire qui coïncident avec une ou plusieurs parties de la nouvelle chaîne de description de transaction financière.

3. Procédé selon la revendication 2, comprenant en outre la catégorisation de la nouvelle transaction financière sur la base des une ou plusieurs sous-chaînes clés issues du dictionnaire qui coïncident avec les une ou plusieurs parties de la nouvelle chaîne de description de transaction financière.

4. Procédé selon la revendication 3, la génération du dictionnaire comportant l'identification, pour chaque sous-chaîne clé, d'un score respectif indiquant la puissance prédictive de la sous-chaîne clé.

5. Procédé selon la revendication 4, comprenant en outre la catégorisation de la nouvelle transaction financière sur la base d'une ou de plusieurs sous-chaînes clés qui coïncident dont le score est le plus élevé.

6. Procédé selon la revendication 1, le processus d'apprentissage machine étant un processus d'apprentissage machine supervisé.

7. Procédé selon la revendication 1, le modèle de génération de dictionnaire comportant un réseau neuronal récurrent.

8. Procédé selon la revendication 7, le modèle de génération de dictionnaire comportant un réseau neuronal récurrent avec attention.

9. Procédé selon la revendication 8, le système de gestion de données comportant :
un système de tenue des comptes ; et/ou
un système de préparation de déclarations de revenus ; et/ou
un système de budgétisation.

10. Procédé selon la revendication 1, les données d'ensemble d'entraînement étant classifiées selon un commerçant prenant part à la transaction financière.

11. Procédé selon la revendication 10, la catégorisation de la nouvelle transaction financière comportant l'identification d'un commerçant prenant part à la nouvelle transaction financière sur la base de la comparaison avec le dictionnaire.

12. Système d'identification de caractéristiques prédictives de chaînes de description de transaction financière, le système comprenant :
au moins un processeur ; et
au moins une mémoire couplée à l'au moins un processeur, l'au moins une mémoire stockant des instructions qui, lorsqu'elles sont exécutées par un ensemble quelconque des un ou plusieurs processeurs, réalisent un processus comportant :
la réception de données de transactions financières liées à une pluralité de transactions financières d'utilisateurs d'un système de gestion de données et comportant, pour chaque transaction financière, une chaîne de description de transaction financière respective ;
la génération, à partir des données de transaction financière, de données d'ensemble d'entraînement comportant une pluralité des chaînes de description de transaction financière étiquetées selon une classification ;
l'entraînement, au moyen d'un processus d'apprentissage machine utilisant les données d'ensemble d'entraînement, d'un modèle de génération de dictionnaire afin de classifier les chaînes de description de transaction financière issues de l'ensemble de données d'entraînement ;
l'identification, à l'aide du modèle de génération de dictionnaire, de sous-chaînes clés issues des chaînes de description de transaction qui sont les plus prédictives dans la classification des chaînes de description de transaction financière sur la base du processus d'apprentissage machine,
l'identification des sous-chaînes clés comportant l'analyse, pour chaque chaîne de description de transaction financière issue des données d'ensemble d'entraînement, d'une puissance prédictive de chacun d'une pluralité de n-grammes issus de la chaîne de description de transaction financière ;
la génération d'un dictionnaire des sous-chaînes clés et de classifications correspondantes des chaînes de description de transaction financière qui étaient les plus prédictives dans la classification des chaînes de description de transaction financière ;
la réception de nouvelles données de transaction financière correspondant à une nouvelle transaction financière d'un utilisateur et comportant une nouvelle chaîne de description de transaction financière ;
la comparaison de la nouvelle chaîne de description de transaction financière au dictionnaire ; et
la catégorisation de la nouvelle transaction financière sur la base de la comparaison entre la nouvelle chaîne de description de transaction financière et le dictionnaire.

13. Système selon la revendication 12, la comparaison de la nouvelle chaîne de description de transaction financière au dictionnaire comportant l'identification d'une ou de plusieurs sous-chaînes clés issues du dictionnaire qui coïncident avec une ou plusieurs parties de la nouvelle chaîne de description de transaction financière.

14. Système selon la revendication 12, certains des n-grammes issus d'une chaîne de description de transaction financière se chevauchant.
